# EUROPEAN PATENT APPLICATION

(11) **EP 3 790 155 A1**
(43) Date of publication of application: **10.03.2021**
(21) Application number: 20193014.6
(22) Date of filing: 27.08.2020
(51) Int. Cl.: H02J 7/02, B60L 53/22, H02M 7/217, B60L 58/20, H02M 1/42, H02M 3/158, H02M 3/335

(54) **ON-BOARD CHARGING AND DISCHARGING SYSTEM**

(30) Priority: 03.09.2019 CN 201910828160
(71) Applicant: Delta Electronics (Shanghai) Co., Ltd., Shanghai 201209 (CN)
(72) Inventor: SUN, Hao, Pudong, Shanghai, 201209 (CN); JIA, Minli, Pudong, Shanghai, 201209 (CN); ZHANG, Jinfa, Pudong, Shanghai, 201209 (CN)
(74) Representative: 2K Patentanwälte Blasberg Kewitz & Reichel

(57) **Abstract**

The embodiments of the present disclosure provide an on-board charging and discharging system, including: a first power conversion module, a second power conversion module, and a third power conversion module, where the input terminals of the first power conversion module, the second power conversion module and the third power conversion module are respectively electrically connected to one corresponding phase of a three-phase power supply; each power conversion module includes an AC-DC converter, a bus capacitor and a first DC-DC converter, an input terminal of the AC-DC converter is electrically connected to the one corresponding phase of the three-phase power supply, and the bus capacitor is connected in parallel with an output of the AC-DC converter and an input of the first DC-DC converter, respectively; where at least the third power conversion module is a bidirectional power conversion module.

## Description

### TECHNICAL FIELD

Embodiments of the present disclosure relate to the field of on-board chargers, and in particular, to an on-board charging and discharging system.

### BACKGROUND

An electric vehicle is usually provided with a first high-voltage storage battery and a second low-voltage storage battery, and the first high-voltage storage battery and the second low-voltage storage battery are charged and discharged by an on-board charging and discharging system. The on-board charging and discharging system can receive single-phase or three-phase alternating current (AC) input from outside, then convert the AC input into direct current (DC) output and charge the first high-voltage storage battery and the second low-voltage storage battery, respectively, and during running of the vehicle, a first voltage of the first high-voltage storage battery can be converted into a second voltage by a DC-DC converter to charge the second low-voltage storage battery.

At present, on-board chargers compatible with single-phase and three-phase charging are favored by more and more customers because of their flexible charging mode and multi-function characteristics. Single-phase charging technology is currently relatively mature. Three-phase AC charging usually uses a three-phase half-bridge circuit, and during operation of the circuit, bus voltage is usually around 800V, and it is necessary to use a silicon carbide device with a withstand voltage of 1200 volts in order to work normally. Under the current technical conditions, the cost of the silicon carbide device as a wide-bandgap semiconductor is relatively high, and the stability of a chip itself needs to be further improved.

Based on the above analysis, this disclosure proposes a modular design idea, and can realize a single-phase and three-phase compatible function, which not only optimizes the cost, but also simplifies the design process and facilitates production automation.

### SUMMARY

It is an object of the present disclosure to provide an on-board charging and discharging system that can be designed and operated at reduced costs and particularly allows to use a device having a relatively low withstand voltage in AC-DC converters and DC-DC converters included in the system.

This problem is solved by an on-board charging and discharging system as claimed by claim 1. Further advantageous embodiments are the subject-matter of the dependent claims.

An embodiment of the present disclosure provides an on-board charging and discharging system for reducing design cost of an on-board charging and discharging system.

In a first aspect, an embodiment of the present disclosure provides an on-board charging and discharging system, including: a first power conversion module, a second power conversion module, and a third power conversion module, where

An input terminal of the first power conversion module, an input terminal of the second power conversion module, and an input terminal of the third power conversion module are respectively electrically connected to one corresponding phase of a three-phase power supply;
each of the power conversion modules includes an AC-DC converter, a bus capacitor and a first DC-DC converter, an input terminal of the AC-DC converter is electrically connected to the one corresponding phase of the three-phase power supply, and the bus capacitor is respectively connected in parallel with an output of the AC-DC converter and an input of the first DC-DC converter;
where at least the third power conversion module is a bidirectional power conversion module.

The on-board charging and discharging system provided by the embodiments of the present disclosure includes: a first power conversion module, a second power conversion module, and a third power conversion module, where an input terminal of the first power conversion module, an input terminal of the second power conversion module and an input terminal of the third power conversion module are respectively electrically connected to one corresponding phase of a three-phase power supply. Each power conversion module includes an AC-DC converter, a bus capacitor, and a first DC-DC converter, an input terminal of the AC-DC converter is electrically connected to the one corresponding phase, the bus capacitor is respectively connected in parallel with an output of the AC-DC converter and an input of the first DC-DC converter. At least the third power conversion module is a bidirectional power conversion module. The above on-board charging and discharging system includes the first power conversion module, the second power conversion module, and the third power conversion module, and during the operation of each power conversion module, the voltage across the bus capacitor is relatively low, so that a device having a relatively low withstand voltage can be used in the AC-DC converter and the first DC-DC converter, thereby reducing the design cost of the AC-DC converter and the first DC-DC converter, and therefore reducing the design cost of the on-board charging and discharging system.

### BRIEF DESCRIPTION OF THE DRAWINGS

In order to more clearly illustrate the embodiments of the present disclosure or the technical solutions in the prior art, a brief description of the drawings used in the embodiments or the prior art description will be briefly described below. Obviously, the drawings in following description are some embodiments of the present disclosure, and those skilled in the art can acquire other drawings according to the drawings without any inventive efforts.
FIG. 1 is an application scenario diagram of an on-board charging and discharging system according to an embodiment of the present disclosure;
FIG. 2 is a first schematic structural diagram of an on-board charging and discharging system according to an embodiment of the present disclosure;
FIG. 3 is a second schematic structural diagram of an on-board charging and discharging system according to an embodiment of the present disclosure;
FIG. 4 is a third schematic structural diagram of an on-board charging and discharging system according to an embodiment of the present disclosure;
FIG. 5 is a fourth schematic structural diagram of an on-board charging and discharging system according to an embodiment of the present disclosure;
FIG. 6 is a fifth schematic structural diagram of an on-board charging and discharging system according to an embodiment of the present disclosure;
FIG. 7 is a first schematic diagram of circuit connection of an on-board charging and discharging system according to an embodiment of the present disclosure;
FIG. 8 is a second schematic diagram of circuit connection of an on-board charging and discharging system according to an embodiment of the present disclosure.

### DESCRIPTION OF EMBODIMENTS

In order to make the purpose, technical solution and advantages of the embodiments of the present disclosure clearer, the technical solutions in the embodiments of the present disclosure are clearly and completely described in the following with reference to the accompanying drawings in the embodiments of the present disclosure. Obviously, the described embodiments are part of the embodiments of the present disclosure, rather than all of them. Based on the embodiments in the present disclosure, all other embodiments obtained by those skilled in the art without creative efforts are within the scope of protection of the present disclosure.

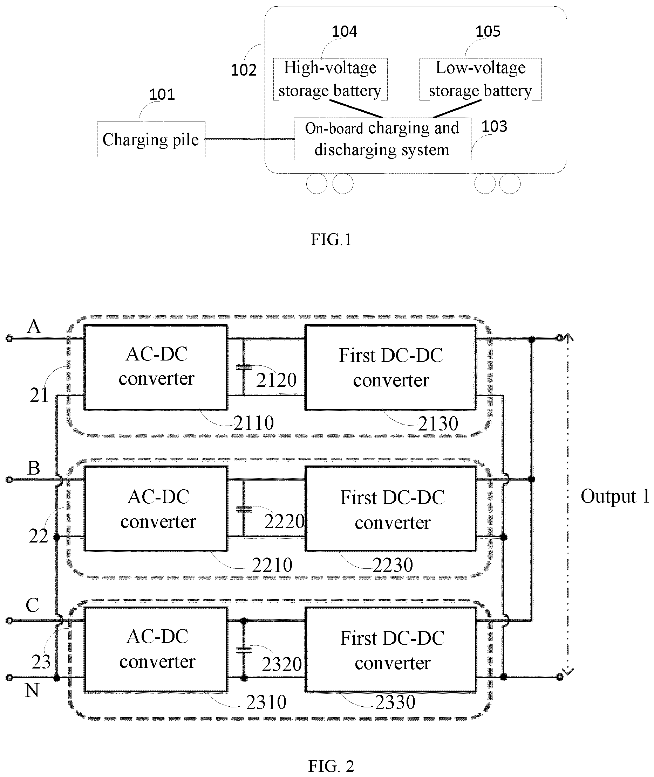

FIG. 1 is an application scenario diagram of an on-board charging and discharging system according to an embodiment of the present disclosure. As shown in FIG. 1, including: a charging pile 101, an electric vehicle 102, an on-board charging and discharging system 103, a high-voltage storage battery 104, and a low-voltage storage battery 105, where the on-board charging and discharging system103, the high-voltage storage battery 104 and the low-voltage storage battery 105 are disposed in the electric vehicle 102.

In practical application, the on-board charging and discharging system 103 includes three power conversion modules, and when the charging pile 101 is a three-phase power supply, the input is converted by the three power conversion modules (where one power conversion module converts one phase of the three-phase power supply), to obtain a first DC voltage (a sum of a voltage from phase A conversion, a voltage from phase B electrical conversion, and a voltage from phase C conversion), and a first voltage is provided to the high-voltage storage battery 104, thereby enabling three-phase charging of the high-voltage storage battery 104 by the on-board charging and discharging system 103. A second DC voltage (DC output converted from one of the phases by an AC-DC converter) is provided to the low-voltage storage battery 105, thereby enabling charging of the low-voltage storage battery 105 by the on-board charging and discharging system 103. When the charging pile 101 is a single-phase power supply, the input is converted by at least one bidirectional power conversion module of the three power conversion modules, and sent to the high-voltage storage battery 104, thereby achieving single phase charging of the high-voltage storage battery 104 by the on-board charging and discharging system 103. When the on-board charging and discharging system 103 discharges, the on-board charging and discharging system 103 can obtain DC voltage from the high-voltage storage battery 104, convert the DC voltage through at least one bidirectional power conversion module to a single phase AC voltage, and transfer the converted single phase AC voltage to the input terminal, wherein the input terminal is electrical connected to an AC load or a power grid, thereby completing the conversion from DC to AC. And the high-voltage storage battery 104 can charge the low-voltage storage battery 105 through a DC-DC converter of one bidirectional power conversion module. In an embodiment, the voltage of the high-voltage storage battery 104 is greater than the voltage of the low-voltage storage battery 105.

When the on-board charging and discharging system charges the storage battery with three-phase power, the three power conversion modules in the on-board charging and discharging system respectively process one phase of the three-phase power supply. Since each module only processes one of the phases, it is more convenient for selection of semiconductor devices, and a device with low cost and low withstand voltage can be used, thereby reducing the design cost of the on-board charging and discharging system.

The technical solutions shown in the present application are described in detail below through specific embodiments. It should be noted that the following specific embodiments may be combined with each other, and the same or similar content will not be repeatedly described in different embodiments.

FIG. 2 is a first schematic structural diagram of an on-board charging and discharging system according to an embodiment of the present disclosure. As shown in FIG. 2, an on-board charging and discharging system includes: a first power conversion module 21, a second power conversion module 22, and a third power conversion module 23, where
an input terminal of the first power conversion module 21, an input terminal of the second power conversion module 22, and an input terminal of the third power conversion module 23 are respectively electrically connected to one corresponding phase of a three-phase power supply;
each power conversion module includes an AC-DC converter, a bus capacitor, and a first DC-DC converter, an input terminal of the AC-DC converter is electrically connected to the one corresponding phase, the bus capacitor is respectively connected in parallel with an output of the AC-DC converter and an input of the first DC-DC converter;
where at least the third power conversion module 23 is a bidirectional power conversion module.

For example, the first power conversion module 21 includes an AC-DC converter 2110, a bus capacitor 2120, and a first DC-DC converter 2130, the second power conversion module 22 includes an AC-DC converter 2210, a bus capacitor 2220 , and a first DC-DC converter 2230, and the third power conversion module 23 includes an AC-DC converter 2310, a bus capacitor 2320, and a first DC-DC converter 2330.

Specifically, the AC-DC converter receives one phase of the three-phase power supply, and converts to output first DC voltage. For example, the AC-DC converter 2110 receives A-phase AC voltage, the AC-DC converter 2210 receives B-phase AC voltage, and the AC-DC converter 2310 receives C-phase AC voltage.

Specifically, the first DC-DC converter is configured to receive the first DC voltage, converter the first DC voltage, and output second DC voltage.

Further, as shown in FIG. 2, A-phase of the three-phase power supply is electrically connected to the AC-DC converter 2110 in the first power conversion module 21, B-phase of the three-phase power supply is electrically connected to the AC-DC converter 2210 in the second power conversion module 22, C-phase in the three-phase power supply is electrically connected to the AC-DC converter 2310 in the third power conversion module 23.

Optionally, the three-phase power supply may further include a neutral line N, and the neutral line N is electrically connected to the AC-DC converters 2110, 2210, 2310 in the first power conversion module 21, the second power conversion module 22, and the third power conversion module 23, respectively.

It should be noted that outputs of the first DC-DC converters in the first power conversion module 21, the second power conversion module 22, and the third power conversion module 23 are connected in parallel to form an output 1 (as shown in FIG. 2), the parallel connected output 1 is electrically connected to the high-voltage storage battery, and provides stable DC electricity with a high voltage to the high-voltage storage battery.

In practical application, when the output 1 charges and discharges the high-voltage storage battery, the voltage across the bus capacitor in each power conversion module is between 300 volts and 500 volts, and therefore, a device with a lower withstand voltage can be used in the AC-DC converter and the first DC-DC converter of each power conversion module, thereby reducing the cost of the AC-DC converter and the first DC-DC converter. In a preferred embodiment, the voltage across the bus capacitor is 400 volts.

Optionally, any one or more of the first power conversion module 21, the second power conversion module 22 and the third power conversion module 23 may be a bidirectional power conversion module.

The on-board charging and discharging system provided by the embodiment of the present disclosure includes: a first power conversion module, a second power conversion module and a third power conversion module, where the input terminal of the first power conversion module, the input terminal of the second power conversion module and the input terminal of the third power conversion module are respectively electrically connected to one corresponding phase of a three-phase power supply. Each power conversion module includes an AC-DC converter, a bus capacitor, and a first DC-DC converter, an input terminal of the AC-DC converter is electrically connected to the one corresponding phase of the three-phase power supply, and the bus capacitor is connected in parallel with an output of the AC-DC converter and an input of the first DC-DC converter, respectively. At least the third power conversion module is a bidirectional power conversion module. The above on-board charging and discharging system includes the first power conversion module, the second power conversion module, and the third power conversion module, and during the operation of each power conversion module, the voltage across the bus capacitor is around 400V, so devices with a lower withstand voltage value can be used in the AC-DC converter and the first DC-DC converter, thereby reducing the cost of the AC-DC converter and the first DC-DC converter, and therefore reducing the cost of the on-board charging and discharging system.

Further, the third power conversion module is a bidirectional power conversion module in the on-board charging and discharging system provided by the embodiment of the disclosure, so that the on-board charging and discharging system has a single-phase charging and discharging function and a three-phase charging function.

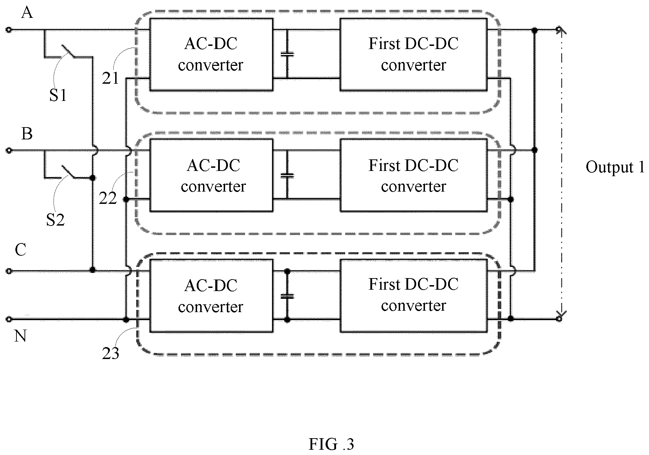

Based on the embodiment of FIG. 2, in order to make the on-board charging and discharging system have a maximum charging and discharging power in the single-phase charging and discharging function, a first regulating switch and a second regulating switch are added in the on-board charging and discharging system. Specifically, please refer to FIG. 3.

FIG. 3 is a second schematic structural diagram of an on-board charging and discharging system according to an embodiment of the present disclosure. On the basis of FIG. 2, as shown in FIG. 3, the on-board charging and discharging system further includes: a first regulating switch S1 and a second regulating switch S2.

The first regulating switch S1 is electrically connected between the input terminal of the third power conversion module 23 and the input terminal of the first power conversion module 21, and the second regulating switch S2 is electrically connected between the input terminal of the third power conversion module 23 and the input terminal of the second power conversion module 22.

In a possible design, when the on-board charging and discharging system is in a charging mode, if charging power of the on-board charging and discharging system is less than or equal to a first power threshold, then the first regulating switch S1 and the second regulating switch S2 are both off; if the charging power is greater than the first power threshold and less than or equal to a second power threshold, then either one of the first regulating switch and the second regulating switch is switched on, and the other switch is off; if the charging power is greater than the second power threshold, the first regulating switch and the second regulating switch are both switched on. The first power threshold may be one third of a maximum power threshold, and the second power threshold may be two thirds of the maximum power threshold.

Optionally, the first regulating switch S1 and the second regulating switch S2 can be any of a relay or a unipolar controllable semiconductor switch. Specifically, the specific types of the first regulating switch and the second regulating switch are not limited in this application.

Optionally, the first regulating switch S1 and the second regulating switch S2 can be on at the same time, or they can be off at the same time, or one of them can be on and the other can be off.

The on-board charging and discharging system provided by the embodiment of the present disclosure further includes: a first regulating switch and a second regulating switch, where the first regulating switch is electrically connected between an input terminal of the third power conversion module and an input terminal of the first power conversion module, and the second regulating switch is electrically connected between the input terminal of the third power conversion module and an input terminal of the second power conversion module. When the on-board charging and discharging system is in a charging mode, if the charging power of the on-board charging and discharging system is less than or equal to a first power threshold, then the first regulating switch and the second regulating switch are both turned off; if the charging power is greater than the first power threshold and less than or equal to a second power threshold, then either one of the first regulating switch and the second regulating switch is turned on, and the other switch is turned off; if the charging power is greater than the second power threshold, the first regulating switch and the second regulating switch are both turned on. In the above on-board charging and discharging system, when the on-board charging and discharging system receives a single-phase voltage, if the charging power of the on-board charging and discharging system is greater than the second power threshold, the first regulating switch and the second regulating switch are both turned on, which can realize a maximum single-phase charging power of the on-board charging and discharging system.

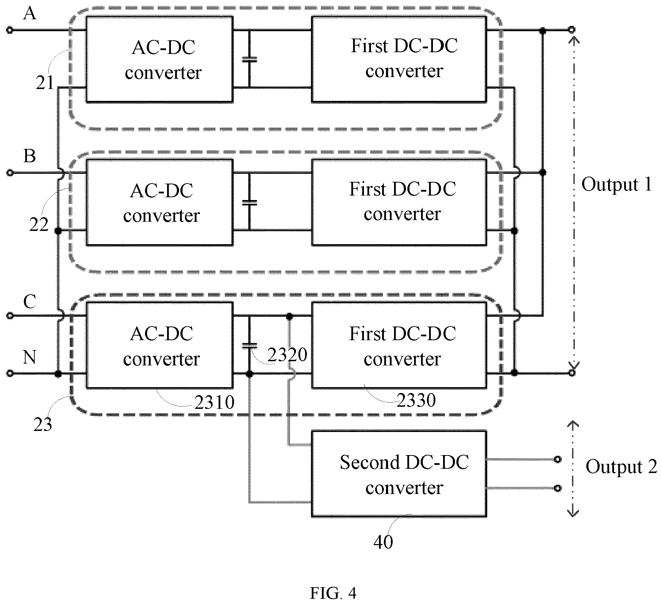

On the basis of FIG. 2, in order to make the on-board charging and discharging system provided by the embodiment of the present disclosure be compatible with a single-phase charging and discharging function and a three-phase charging function, the embodiment of the present disclosure provides another on-board charging and discharging system, and specifically, please refer to FIG. 4.

FIG. 4 is a third schematic structural diagram of an on-board charging and discharging system according to an embodiment of the present disclosure. On the basis of FIG. 2, as shown in FIG. 4, the on-board charging and discharging system further includes: a second DC-DC converter 40, where
an input of the second DC-DC converter 40 is connected in parallel to two ends of the bus capacitor 2320 of the bidirectional power conversion module 23.

It should be noted that the bidirectional power conversion module 23 is the third power conversion module 23.

Further, an output 2 of the second DC-DC converter 40 can be electrically connected to a low-voltage storage battery or to a load in an electric vehicle.

Optionally, the load in an electric vehicle can be an air conditioner, a lamp, an audio-visual device, etc.

Specifically, the second DC-DC converter 40 is used to provide DC voltage to the low-voltage storage battery or the load in the electric vehicle.

The on-board charging and discharging system provided by the embodiment of the disclosure further includes a second DC-DC converter, where an input of the second DC-DC converter is connected in parallel to the bus capacitor of the bidirectional power conversion module. In the embodiment of the disclosure, the on-board charging and discharging system includes a second DC-DC converter, at the same time the on-board charging and discharging system is compatible with a single-phase charging and discharging function and a three-phase charging function.

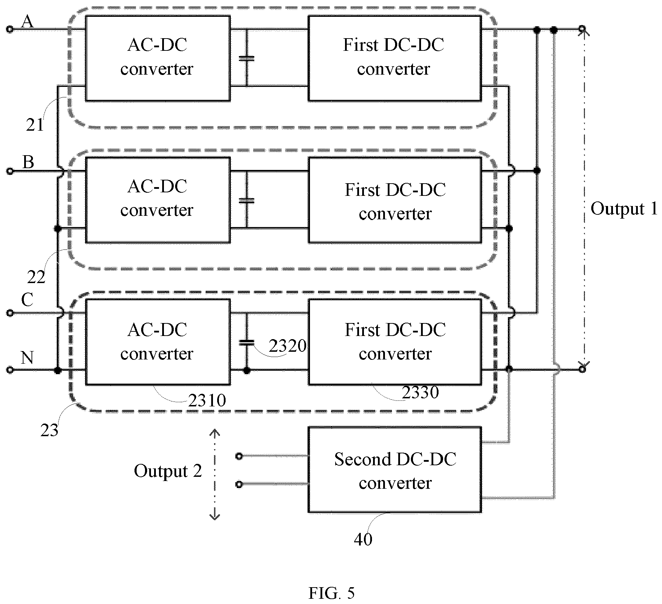

On the basis of FIG. 2, in order to make the on-board charging and discharging system provided by the embodiment of the present disclosure be compatible with a single-phase charging and discharging function and a three-phase charging function, the embodiment of the present disclosure provides another on-board charging and discharging system, and specifically, please refer to FIG. 5.

FIG. 5 is a fourth schematic structural diagram of an on-board charging and discharging system according to an embodiment of the present disclosure. On the basis of FIG. 2, as shown in FIG.5, the on-board charging and discharging system also includes: a second DC-DC converter 40, where
outputs of the first power conversion module 21, the second power conversion module 22, and the bidirectional power conversion module 23 are connected in parallel, an output 1 of the first power conversion module 21, the second power conversion module 22 and the bidirectional power conversion module 23 connected in parallel is connected in parallel with an input of the second DC-DC converter 40.

The on-board charging and discharging system provided by the embodiment of the present disclosure further includes a second DC-DC converter, where outputs of the first power conversion module, the second power conversion module and the bidirectional power conversion module are connected in parallel to an input of the second DC-DC converter. In the embodiment of the disclosure, the on-board charging and discharging system includes the second DC-DC converter, so that the on-board charging and discharging system is compatible with a single-phase charging and discharging function and a three-phase charging function.

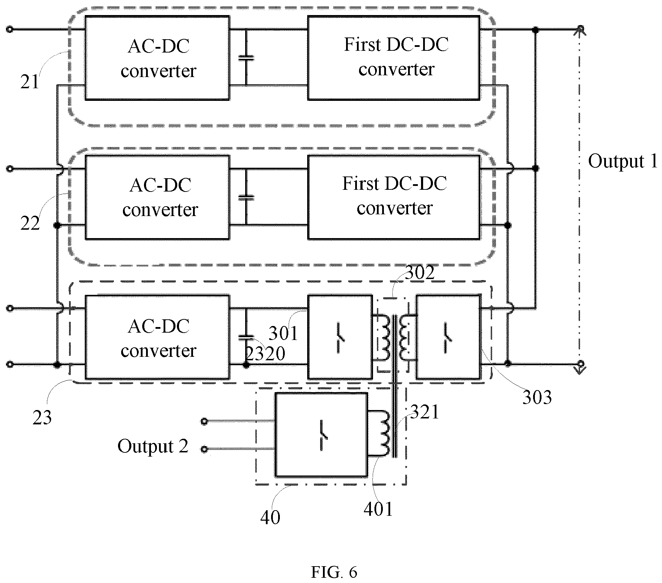

On the basis of FIG. 2, in order to make the on-board charging and discharging system provided by the embodiment of the present disclosure be compatible with a single-phase charging and discharging function and a three-phase charging function, the embodiment of the present disclosure provides still another on-board charging and discharging system, and specifically, please refer to FIG.6.

FIG. 6 is a fifth schematic structural diagram of an on-board charging and discharging system according to an embodiment of the present disclosure. On the basis of FIG. 2, as shown in FIG.6, the on-board charging and discharging system also includes: a second DC-DC converter 40, where
the first DC-DC converter 2330 includes a primary side circuit 301 and a second transformer 302, and the second DC-DC converter 40 includes a first coil 401, and the first coil 401 shares a magnetic core 321 with the second transformer 302 of the first DC-DC converter.

Further, the first DC-DC converter 2330 further includes a secondary circuit 303.

Specifically, a primary side coil of the second transformer 302 is electrically connected to the primary side circuit 301, the primary side circuit 301 is connected in parallel with a bus capacitor 2320, and a secondary side coil of the second transformer 302 is electrically connected to a secondary side circuit 303.

The on-board charging and discharging system provided by the embodiment of the present disclosure further includes a second DC-DC converter, where the first DC-DC converter of the bidirectional power conversion module includes a primary side circuit and a second transformer, the second DC-DC converter includes a first coil, and the first coil shares a magnetic core 321 with the second transformer of the first DC-DC converter. In the embodiment of the disclosure, the on-board charging and discharging system also includes the second DC-DC converter, so that the on-board charging and discharging system is compatible with a single-phase charging and discharging function and a three-phase charging function.

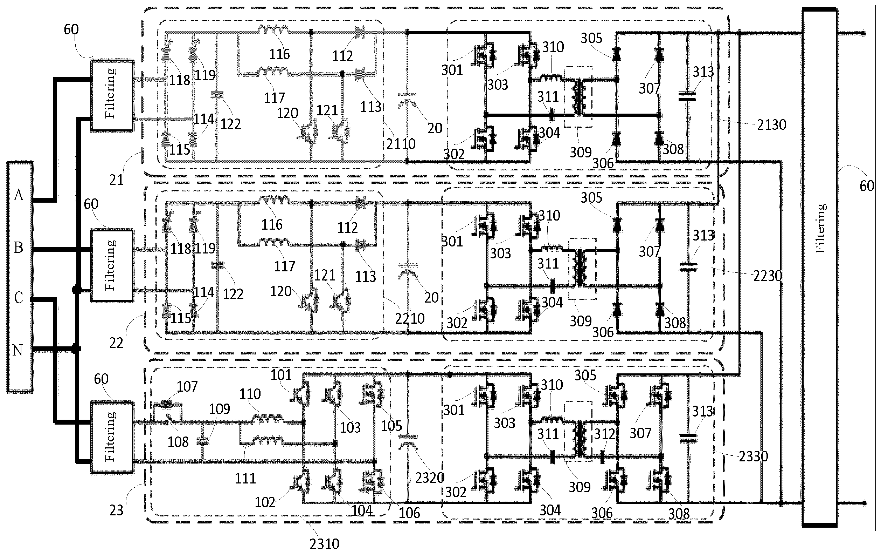

Based on the above embodiments, the embodiment of the present disclosure further provides a schematic diagram of circuit electrical connection of an on-board charging and discharging system. Specifically, please refer to FIG. 7.

FIG. 7 is a first schematic diagram of circuit of an on-board charging and discharging system according to an embodiment of the present disclosure. As shown in FIG. 7, the first DC-DC converter of each of the power conversion modules (specifically, the first DC-DC converter 2130, the first DC-DC converter 2230, the first DC-DC converter 2330) in the on-board charging and discharging system includes: a second transformer 309, a third bridge arm, a fourth bridge arm, a fifth bridge arm, and a sixth bridge arm, where
the third bridge arm includes a fifth switch 301 and a sixth switch 302 connected in series;
the fourth bridge arm includes a seventh switch 303 and an eighth switch 304 connected in series;
the fifth bridge arm includes a ninth switch 305 and a tenth switch 306 connected in series;
the sixth bridge arm includes an eleventh switch 307 and a twelfth switch 308 connected in series;
the third bridge arm and the fourth bridge arm are connected in parallel to the bus capacitor, and the fifth bridge arm and the sixth bridge arm are connected in parallel to output;
an end of a primary side of the second transformer 309 is electrically connected to a junction of the fifth switch 301 and the sixth switch 302, another end of the primary side of the second transformer 309 is electrically connected to a junction of the seventh switch 303 and the eighth switch 304, an end of a secondary side of the second transformer 309 is electrically connected to a junction of the ninth switch 305 and the tenth switch 306, and another end of the secondary side of the second transformer 309 is electrically connected to a junction of the eleventh switch 307 and the twelfth switch 308.

Specifically, the fifth and sixth bridge arms of each of the first DC-DC converters are connected in parallel to an output 1. In a power conversion module, the third bridge arm and the fourth bridge arm of the power conversion module are connected in parallel to the bus capacitor in the power conversion module.

Further, the first DC-DC converters 2130, 2230 and 2330 further include: an inductor 310, a capacitor 311, and a capacitor 313, where an electrical connection relationship of the inductor 310, the capacitor 311 and the capacitor 313 in the on-board charging and discharging system is as shown in FIG. 7. The first DC-DC converter 2330 further includes a capacitor 312, and an electrical connection relationship of the capacitor 312 in the on-board charging and discharging system is as shown in FIG. 7. The details will not be described herein.

In a possible design, the fifth switch 301, the sixth switch 302, the seventh switch 303, and the eighth switch 304 are insulated gate bipolar transistors (IGBT), metal-oxide semiconductor field effect transistors (MOSFET) or silicon carbide (SiC) devices;
the ninth switch 305, the tenth switch 306, the eleventh switch 307, and the twelfth switch 308 are insulated gate bipolar transistors (IGBT), metal-oxide semiconductor field effect transistors (MOSFET), silicon carbide (SiC) devices, or diodes.

It should be noted that the first DC-DC converter of each of the power conversion modules shown in FIG. 7 is determined according to the on-board charging and discharging system shown in FIG. 2 to FIG.5.

In another possible design, the AC-DC converter of the bidirectional power conversion module 23 includes: a seventh bridge arm, an eighth bridge arm, and a ninth bridge arm, where
the seventh bridge arm includes a thirteenth switch 101 and a fourteenth switch 102 connected in series;
the eighth bridge arm includes a fifteenth switch 103 and a sixteenth switch 104 connected in series;
the ninth bridge arm includes a seventeenth switch 105 and an eighteenth switch 106 connected in series;
the seventh bridge arm, the eighth bridge arm, and the ninth bridge arm are connected in parallel to the bus capacitor 2320 of the bidirectional power conversion module 23.

In another possible design, the thirteenth switch 101, the fourteenth switch 102, the fifteenth switch 103, the sixteenth switch 104, the seventeenth switch 105, and the eighteenth switch 106 are insulated gate bipolar transistors (IGBT), metal-oxide semiconductor field effect transistors (MOSFET) or silicon carbide (SiC) devices.

In another possible design, the AC-DC converter 2310 of the bidirectional power conversion module further includes: a first resistor 107 and a first pre-charging switch 108, where
an end of the first resistor 107 and an end of the first pre-charging switch 108 are electrically connected to one phase of the three-phase power supply, respectively, and another end of the first resistor 107 and another end of the first pre-charging switch 108 are electrically connected to a connection point of the thirteenth switch 101 and the fourteenth switch 102, and a connection point of the fifteenth switch 103 and the sixteenth switch 104, respectively. The first resistor 107 and the first pre-charging switch 108 implement a pre-charge function of the capacitor 2320.

Specifically, the AC-DC converter 2310 of the bidirectional power conversion module 23 further includes: a capacitor 109, an inductor 110, and an inductor 111, where an electrical connection relationship of the capacitor 109, the inductor 110 and the inductor 111 in the bidirectional power conversion module 23 is shown in FIG. 7, which will not be described in detail herein.

It should be noted that the AC-DC converters 2110 and 2210 are identical, and include: a diode 112, a diode 113, a diode 114, a diode 115, an inductor 116, an inductor 117, a thyristor 118, a thyristor 119, a switch 120, a switch 121, and a capacitor 122, where the switch 120 and the switch 121 may be insulated gate bipolar transistors (IGBT), metal-oxide semiconductor field effect transistors (MOSFET) or silicon carbide (SiC) devices.

Further, an electrical connection relationship of the diode 112, the diode 113, the diode 114, the diode 115, the inductor 116, the inductor 117, the thyristor 118, the thyristor 119, the switch 120, the switch 121, and the capacitor 122 in the AC-DC converters 2110 and 2210 is shown in FIG. 7, which will not be described in detail herein.

In a possible design, the on-board charging and discharging system further includes: at least one low-pass filtering unit 60, one low-pass filtering unit corresponding to one power conversion module, where
each power conversion module is electrically connected to one phase of the three-phase power supply through a corresponding low-pass filtering unit 60;
each low-pass filtering unit 60 is configured to filter out a high frequency harmonic current in one corresponding phase of the three-phase power supply.

Optionally, a low-pass filtering units 60 may be electrically connected to an output 1 of the first power conversion module, the second power conversion module and the third power conversion module, and be configured to filter out the high frequency harmonic current in the DC electricity output from the output 1.

It should be noted that when the on-board charging and discharging system further includes the low-pass filtering unit 60, a first input terminal of the low-pass filtering unit 60 is electrically connected to one phase of the three-phase power supply, and a second input is electrically connected to a neutral line N of the three-phase power supply, a first output terminal of the low-pass filtering unit 60 is electrically connected to the first resistor and the first pre-charging switch which are connected in parallel, and a second output terminal of the low-pass filtering unit 60 is electrically connected to the connection point of the seventeenth switch and the eighteenth switch.

The on-board charging and discharging system provided by the embodiment of the present disclosure further includes at least one low-pass filtering unit, and one low-pass filtering unit corresponds to one power conversion module. Each power conversion module is electrically connected to one phase of the three-phase power supply through a corresponding low-pass filtering unit. Each low-pass filtering unit is configured to filter out a high frequency harmonic current in one corresponding phase of the three-phase power supply. In the above on-board charging and discharging system, the low-pass filtering unit can filter out the high frequency harmonic current in one phase corresponding to each of the power conversion modules.

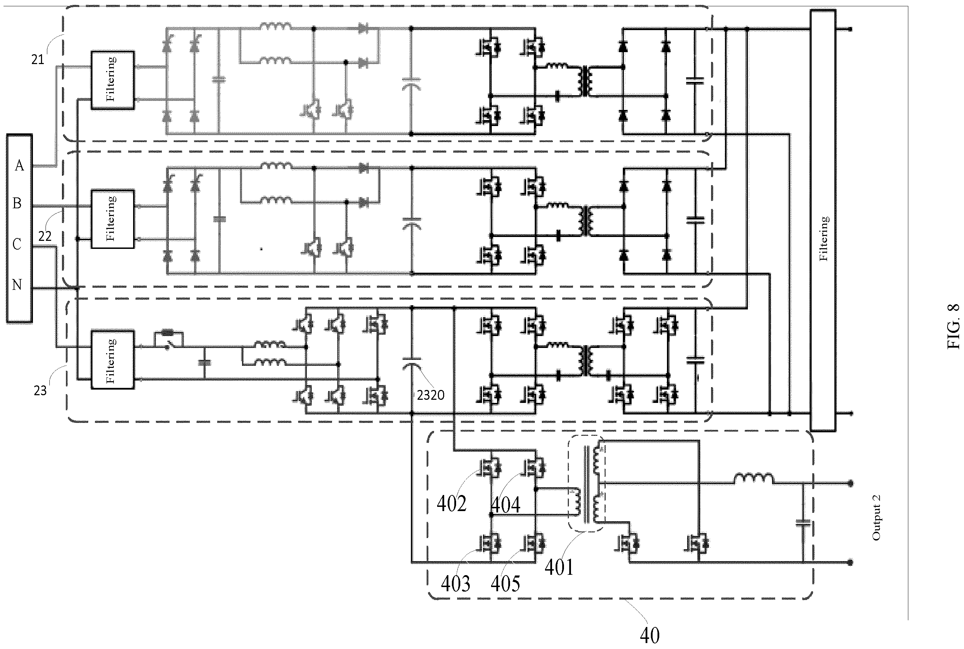

FIG. 8 is a second schematic diagram of circuit of an on-board charging and discharging system according to an embodiment of the present disclosure. On the basis of FIG. 7, the second DC-DC converter 40 in the on-board charging and discharging system includes: a first transformer 401, a first bridge arm, and a second bridge arm, where
the first bridge arm includes a first switch 402 and a second switch 403 connected in series;
the second bridge arm includes a third switch 404 and a fourth switch 405 connected in series;
the first bridge arm and the second bridge arm are connected in parallel to the bus capacitor 2320 of the bidirectional power conversion module 23;
an end of a primary side of the first transformer 401 is electrically connected to a junction of the first switch 402 and the second switch 403, another end of the primary side of the first transformer 401 is electrically connected to a junction of the third switch 404 and the fourth switch 405, and a secondary side of the first transformer 401 is a full-wave rectifier circuit, a full-bridge rectifier circuit, or a half-bridge rectifier circuit.

In a possible design, the first switch 402, the second switch 403, the third switch 404, and the fourth switch 405 are insulated gate bipolar transistors (IGBT), metal-oxide semiconductor field effect transistors (MOSFET) or silicon carbide (SiC) devices.

The on-board charging and discharging system provided by the embodiment of the present disclosure further includes a second DC-DC converter, where the second DC-DC converter includes a first transformer, a first bridge arm, and a second bridge arm. The first bridge arm includes a first switch and a second switch connected in series. The second bridge arm includes a third switch and a fourth switch connected in series. The first bridge arm and the second bridge arm are connected in parallel to the bus capacitor of the bidirectional power conversion module. An end of a primary side of the first transformer is electrically connected to a junction of the first switch and the second switch, another end of the primary side of the first transformer is electrically connected to a junction of the third switch and the fourth switch, a secondary side of the first transformer is a full-wave rectifier circuit, a full-bridge rectifier circuit, or a half-bridge rectifier circuit. In the embodiment of the disclosure, the on-board charging and discharging system is compatible with a single-phase charging and discharging function and a three-phase charging function due to the second DC-DC converter.

Finally, it should be noted that the above embodiments are only used to illustrate the technical solutions of the present disclosure, instead of limiting it; although the present disclosure has been described in detail with reference to the foregoing embodiments, those skilled in the art should understand that the technical solutions described in the foregoing embodiments may be modified, or some or all of the technical features may be equivalently replaced; however, these modifications or substitutions do not deviate from the scope of the technical solutions of the embodiments of the present disclosure.

## Claims

1. An on-board charging and discharging system, comprising: a first power conversion module (21), a second power conversion module (22), and a third power conversion module (23), wherein
input terminal of the first power conversion module (21), input terminal of the second power conversion module (22), and input terminal of the third power conversion module (23) are respectively electrically connected to one corresponding phase of a three-phase power supply;
each of the power conversion modules (21, 22, 23) includes an AC-DC converter (2110, 2210, 2310), a bus capacitor (2120, 2220, 2320) and a first DC-DC converter (2130, 2230, 2330), an input terminal of the AC-DC converter (2110, 2210, 2310) is electrically connected to the one corresponding phase of the three-phase power supply, and the bus capacitor (2120, 2220, 2320) is respectively connected in parallel with an output of the AC-DC converter (2110, 2210, 2310) and an input of the first DC-DC converter (2130, 2230, 2330);
wherein at least the third power conversion module (23) is a bidirectional power conversion module.

2. The system according to claim 1, wherein the system further comprises: a second DC-DC converter (40), wherein
an input of the second DC-DC converter (40) is connected in parallel to the bus capacitor (2320) of the bidirectional power conversion module (23).

3. The system according to claim 1, wherein the system further comprises: a second DC-DC converter (40), wherein
output of the first power conversion module (21), output of the second power conversion module (22) and output of the third power conversion module (23) are connected in parallel to an input of the second DC-DC converter (40).

4. The system according to claim 2 or 3, wherein the second DC-DC converter (40) comprises: a first transformer (401), a first bridge arm and a second bridge arm, wherein
the first bridge arm comprises a first switch (402) and a second switch (403) connected in series;
the second bridge arm comprises a third switch (404) and a fourth switch (405) connected in series;
the first bridge arm and the second bridge arm are connected in parallel to the bus capacitor (2320) of the bidirectional power conversion module (23);
an end of a primary side of the first transformer (401) is electrically connected to a junction of the first switch (402) and the second switch (403), another end of the primary side of the first transformer (401) is electrically connected to a junction of the third switch (404) and the fourth switch (405), and a secondary side of the first transformer (401) is a full-wave rectifier circuit, a full-bridge rectifier circuit, or a half-bridge rectifier circuit.

5. The system according to claim 4, wherein
the first switch (402), the second switch (403), the third switch (404), and the fourth switch (405) are insulated gate bipolar transistors, metal-oxide semiconductor field effect transistors or silicon carbide devices.

6. The system according to claim 1, wherein the system further comprises: a second DC-DC converter, wherein
the first DC-DC converter of the bidirectional power conversion module (23) comprises a primary side circuit and a second transformer, the second DC-DC converter comprises a first coil, and the first coil shares a magnetic core (321) with the second transformer of the first DC-DC converter of the bidirectional power conversion module (23).

7. The system according to any one of claims 1-3 or 6, wherein the first DC-DC converter of each of the power conversion modules comprises: a second transformer (309), a third bridge arm, a fourth bridge arm, a fifth bridge arm, and a sixth bridge arm,
the third bridge arm comprises a fifth switch (301) and a sixth switch (302) connected in series;
the fourth bridge arm comprises a seventh switch (303) and an eighth switch (304) connected in series;
the fifth bridge arm comprises a ninth switch (305) and a tenth switch (306) connected in series;
the sixth bridge arm comprises an eleventh switch (307) and a twelfth switch (308) connected in series;
the third bridge arm and the fourth bridge arm are connected in parallel to the bus capacitor, and the fifth bridge arm and the sixth bridge arm are connected in parallel to output of the first DC-DC converter;
an end of a primary side of the second transformer (309) is electrically connected to a junction of the fifth switch (301) and the sixth switch (302), another end of the primary side of the second transformer (309) is electrically connected to a junction of the seventh switch (303) and the eighth switch (304), an end of a secondary side of the second transformer (309) is electrically connected to a junction of the ninth switch (305) and the tenth switch (306), and another end of the secondary side of the second transformer (309) is electrically connected to a junction of the eleventh switch (307) and the twelfth switch (308).

8. The system according to claim 7, wherein
the fifth switch (301), the sixth switch (302), the seventh switch (303) and the eighth switch (304) are insulated gate bipolar transistors, metal-oxide semiconductor field effect transistors or silicon carbides;
the ninth switch (305), the tenth switch (306), the eleventh switch (307) and the twelfth switch (308) are insulated gate bipolar transistors and metal-oxide semiconductor field effect transistors, silicon carbide devices or diodes.

9. The system according to any one of claims 1-3 or 6, wherein the AC-DC converter of the bidirectional power conversion module (23) comprises: a seventh bridge arm, an eighth bridge arm, and a ninth bridge arm,
the seventh bridge arm comprises a thirteenth switch (101) and a fourteenth switch (102) connected in series;
the eighth bridge arm comprises a fifteenth switch (103) and a sixteenth switch (104) connected in series;
the ninth bridge arm comprises a seventeenth switch (105) and an eighteenth switch (106) connected in series;
the seventh bridge arm, the eighth bridge arm and the ninth bridge arm are connected in parallel to the bus capacitor (2320) of the bidirectional power conversion module (23).

10. The system according to claim 9, wherein
the thirteenth switch (101), the fourteenth switch (102), the fifteenth switch (103), the sixteenth switch (104), the seventeenth switch (105) and the eighteenth switch (106) are insulated gate bipolar transistors, metal-oxide semiconductor field effect transistors or silicon carbide devices.

11. The system according to claim 1, wherein the AC-DC converter (2310) of the bidirectional power conversion module (23) further comprises: a first resistor (107) and a first pre-charging switch (108), wherein
an end of the first resistor (107) and an end of the first pre-charging switch (108) are electrically connected to one phase of the three-phase power supply, respectively, and another end of the first resistor (107) and another end of the first pre-charging switch (108) are electrically connected to the AC-DC converter (2310) of the bidirectional power conversion module (23).

12. The system according to claim 1, wherein the system further comprises: at least one low-pass filtering unit (60), one low-pass filtering unit corresponding to one power conversion module,
each power conversion module is electrically connected to one phase of the three-phase power supply through a corresponding low-pass filtering unit (60);
each of the at least one low-pass filtering unit (60) is configured to filter out a high frequency harmonic current of one phase of the three-phase power supply corresponding to each of the power conversion modules.

13. The system according to claim 1, wherein the system further comprises: a first regulating switch (SI) and a second regulating switch (S2),
the first regulating switch (S1) is electrically connected between the input terminal of the third power conversion module (23) and the input terminal of the first power conversion module (21), and the second regulating switch (S2) is electrically connected between the input terminal of the third power conversion module (23) and the input terminal of the second power conversion module (22).

14. The system according to claim 13, wherein when the on-board charging and discharging system is in a charging mode, if charging power of the on-board charging and discharging system is less than or equal to a first power threshold, then the first regulating switch (S1) and the second regulating switch (S2) are both off; if the charging power is greater than the first power threshold and less than or equal to a second power threshold, either one of the first regulating switch (S1) and the second regulating switch (S2) is on, and the other switch is off; if the charging power is greater than the second power threshold, the first regulating switch (S1) and the second regulating switch (S2) are both on.
